# EUROPEAN PATENT APPLICATION

(11) **EP 0 777 185 A1**
(43) Date of publication of application: **04.06.1997**
(21) Application number: 96118841.4
(22) Date of filing: 25.11.1996
(51) Int. Cl.: G06F 13/40

(54) **A system for communication between microprocessors**

(30) Priority: 29.11.1995 IT TO950955
(71) Applicant: MAGNETI MARELLI S.p.A., 20145 Milano (IT)
(72) Inventor: Nazha, Hassan, 27028 S. Martino Siccomario (Pavia) (IT); Borin, Andrea, 29015 Castel S. Giovanni (Piacenza) (IT)
(74) Representative: Quinterno, Giuseppe

(57) **Abstract**

A communication system for transferring data between two microprocessors (A, B) disposed on the same electronics board uses the I/O ports (PA0, ..., PA7; PB0, ..., PB7) of the two microprocessors (A, B) connected to one another by a set of tracks (DATA1, ..., DATA8), and a further conductor (CTRL) connecting two ports (IC-A/PDO, IC-B/PCO) of the two microprocessors (A, B) for the transmission of the control signals.

## Description

The present invention relates in general to systems for communication between microprocessors and, more specifically, relates to a system for communication between two microprocessors disposed on the same electronics board.

It often occurs, particularly in the automotive field, that two microprocessors or microcontrollers are mounted on the same electronics board and have to talk to one another. The use of two microcontrollers on a single board may be justified for the separate and modular management of the functions to be implemented on the same electronics board, particularly when one microcontroller is dedicated, for example, to the control of communications in a multiplex network with a cell describing the communications protocol integrated in the microcontroller itself.

Some solutions for the exchange of data between two microprocessors are known in the art. A first type of solution is based on the use of a memory in which the data to be transferred from one microprocessor to the other are written and from which they are subsequently read. A dual-port RAM memory may be used, for example, for this purpose. Alternatively it is also possible to use the conventional RAM by means of the Direct Memory Access technique or DMA.

A second set of solutions consists of the use of conventional dedicated, serial or parallel communication lines (for example, SPI, SCI).

These solutions, which are known in the art, have the disadvantage, however, of being very complex and expensive. In fact, they typically require the use of external components, complex protocols or a large printed-circuit area.

The object of the present invention is to provide a communication system for microprocessors which overcomes all of the problems indicated above in a satisfactory manner.

According to the present invention, this object is achieved by means of a communication system for microprocessors having the characteristics indicated in the claims which follow the present description.

Further advantages and characteristics of the present invention will become clear from the following detailed description given with the aid of the appended drawings, provided by way of non-limiting example, in which:
Figure 1 is a schematic block diagram of a possible embodiment of the communication system according to the invention,
Figures 2, 3 and 4 are schematic block diagrams of alternative embodiments of the communication system according to the invention.

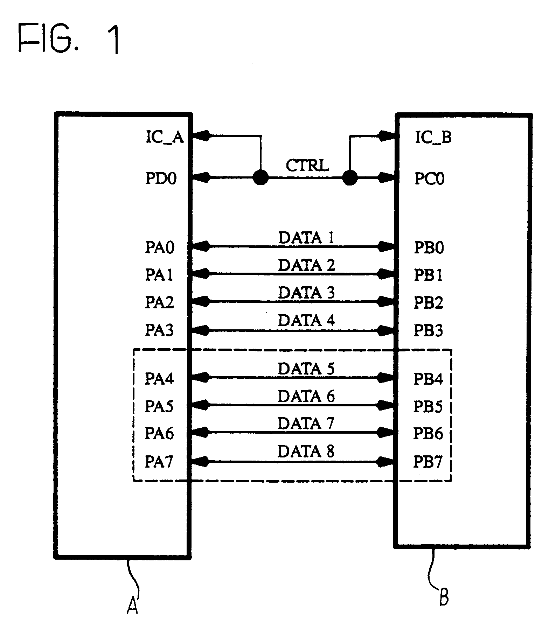

The system according to the invention consists essentially of the use of the input/output ports (also named in short as I/O ports) of the microprocessors for transferring data. The invention will now be described in detail with reference to Figure 1.

As can be seen, Figure 1 shows two microprocessors A and B connected to one another by means of a set of conductors formed as conductive tracks on the electronic printed-circuit board on which the microprocessors A and B are mounted. A set of these conductors, indicated DATA1 - DATA4 in the drawing, connects a plurality of I/O ports PA0-PA3 of the microprocessor A to a plurality of I/O ports PB0-PB3 of the microprocessor B.

No particular number of conductors is provided, but it is convenient if the number is a multiple or a submultiple of 8, that is of the number of bits in a byte. For example, Figure 1 shows a set of four conductors DATA1 - DATA4 which enable half a byte (or a nibble) to be transferred at a time. If sufficient I/O ports are available, eight conductors may be used so as to be able to transfer one byte at a time. In this case, there are also conductors DATA5 - DATA8 connecting the sets of I/O ports PA4-PA7 and PB4-PB7, in the block shown in broken outline in Figure 1.

A further I/O port for each of the two microprocessors A and B is also used for control functions. There is therefore a further conductor CTRL which connects an I/O port PD0 of the microprocessor A to an I/O port PC0 of the microprocessor B. This conductor CTRL also connects an input-capture port for each of the microprocessors A and B. The conductor CTRL is thus connected to an input-capture port IC-A of the microprocessor A and to a port IC-B of the microprocessor B.

The protocol for communications between the two microprocessors provides for one of them to start the transmission as the "master" and for the other to remain waiting for data as a "slave". It may be assumed that, at a given moment, the microprocessor A is the master and the microprocessor B is the slave. In this case, the port PD0 is configured as an output and the port PC0 is configured as an input. Moreover, the port IC-B of the microprocessor B is enabled and the port IC-A of the microprocessor A is disabled.

At this point, the microprocessor A can start transmitting data by outputting a set of bits on the I/O ports PA0-PA3 (or PA0-PA7), and by emitting a low-value logic signal for a predetermined period of time, for example 20 microseconds, on the conductor CTRL. The conductor CTRL is normally kept at a high logic level. At this point, the microprocessor A enables its input-capture port IC-A and configures its I/O port PD0 as an input. The microprocessor B, on the other hand, activates its input-capture port IC-B and reads the data at its I/O ports PB0-PB3 (or PB0-PB7).

The microprocessor B then configures its I/O port PC0 as an output and outputs a low-value logic signal by means of this port for a predetermined period of time, for example, 20 microseconds. The microprocessor A receives this signal by means of its input-capture port CI-A and interprets this pulse transmitted on the conductor CTRL as an acknowledgement of the receipt of the data just transmitted via the I/O ports. At this point, the microprocessor A starts the transmission of a new set of data in the manner just described. The sequence is repeated a number of times equal to the number of sets of data to be transferred from the microprocessor A to the microprocessor B.

One of the numerous techniques known in the art may be used to reverse the roles of the microprocessors A and B. For example, both of the microprocessors A and B may use counters indicating the number of sets of data transmitted/received, the direction of communication being reversed with the microprocessor B becoming the master and the microprocessor A becoming the slave, once a predetermined number has been reached. The number of sets of data to be transmitted/received may be transmitted, for example, in a predetermined position at the beginning of the transfer of data from one microprocessor to the other so that this number is known to both of the microprocessors when data-transfer starts.

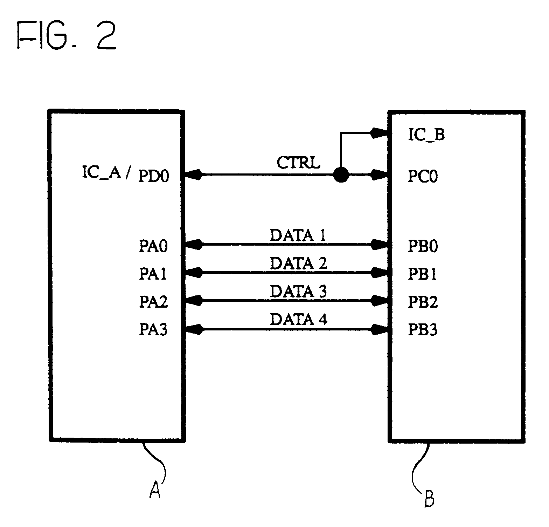

Alternative embodiments are also possible, particularly with regard to the connections of the conductor CTRL, for example, because of the type of microprocessors or microcontrollers used. For example, if the microprocessor A is a microcontroller of the type known by the number MC68HC11XXX and the microprocessor B is a microcontroller of the type known by the number MC68HC05X4, the configuration shown in Figure 2 may be used. In this case, the microcontroller A uses the same port IC-A/PD0 as the control port and as the input-capture port connected to the conductor CTRL. This port IC-A/PD0 can be configured both as an I/O port and as an input-capture port.

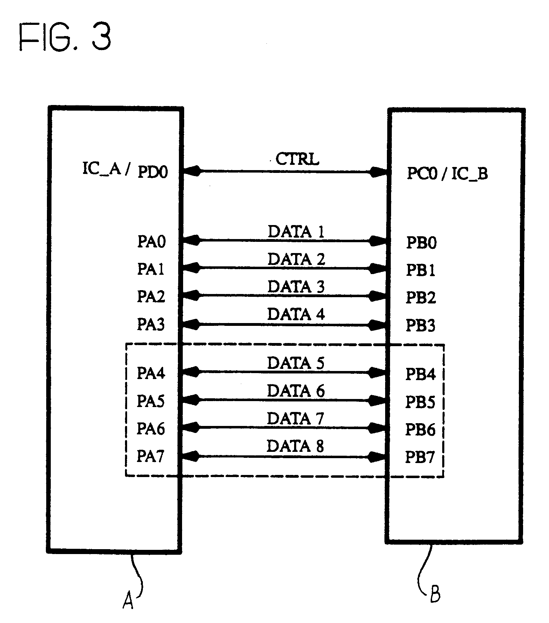

Figure 3 shows a further embodiment in which both of the microprocessors have ports IC-A/PD0 and PC0/IC-B which can be configured both as I/O ports and as input-capture ports.

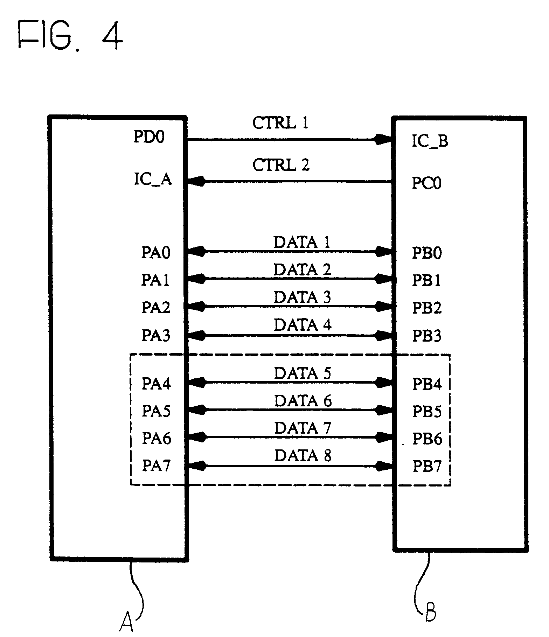

Finally, Figure 4 shows an embodiment in which both of the microprocessors A and B have I/O ports PD0 and PC0 used for control and separate input-capture ports IC-A and IC-B. In this case, however, two conductors CTRL1 and CTRL2 are used for the transmission of the control signals. More specifically, the two conductors CTRL1 and CTRL2 are unidirectional rather than bi-directional; in particular, the conductor CTRL1 permits transmission from the port PD0 of the microprocessor A to the port IC-B of the microprocessor B and the conductor CTRL2 permits transmission from the port PC0 of the microprocessor B to the port IC-A of the microprocessor A.

The system according to the invention has a certain number of advantages in comparison with solutions of the prior art. The cost of the components is in fact less compared with the solution with dedicated transmission lines. The area occupied on the electronic printed-circuit board is very small. The cycle time, that is, the time in which the transmission of a set of data is effected, is less than or, at most, equal to that of the solution with dedicated transmission lines. The use of components linked to a specific microprocessor for the transfer of data using control signals such as address strobe, data strobe, ready, etc, or external components for the control of the Direct Memory Access DMA or the dual-port RAM is avoided. Moreover, diagnosis of the communication system can be carried out easily by software procedures.

Naturally, the principle of the invention remaining the same, the details of construction and forms of embodiment may be varied widely with respect to those described and illustrated, without thereby departing from the scope of the present invention as defined in the annexed claims.

## Claims

1. A system for communication between at least two microprocessors (A, B) disposed on the same board, characterized in that it comprises:
- a plurality of conductors (DATA1, ..., DATA8) connecting a plurality if input/output ports (PA0, ..., PA7) of a first microprocessor (A) to a plurality of input/output ports (PB0, ..., PB7) of a second microprocessor (B),
- at least one further conductor (CTRL) for transmitting control signals, connecting at least one port (IC-A, PD0) of the first microprocessor (A) to a port (IC-B, PC0) of the second microprocessor (B),
- the two microprocessors (A, B) being configured for transmitting data via the plurality of conductors (DATA1, ..., DATA8), using the further conductor (CTRL) for the transmission of control signals indicative of the start of transmission and acknowledgement of receipt.

2. A system according to Claim 1, characterized in that the microprocessors (A, B) are configured for transmitting a plurality of bits in parallel via the plurality of conductors (DATA1, ..., DATA8) and the plurality of input/output ports (PA0, ..., PA7; PB0, ..., PB7).

3. A system according to Claim 2, characterized in that the microprocessors (A, B) are configured for transmitting a sequence of pluralities of bits from a first of the two microprocessors (A, B) to a second.

4. A system according to any one of Claims 1 to 3, characterized in that, during the transmission of data, a first microprocessor is configured as the master and a second microprocessor is configured as the slave.

5. A system according to Claim 4, characterized in that the first microprocessor (A) is configured for:
- transmitting a transmission start signal via the further conductor (CTRL),
- outputting a plurality of datum bits on the plurality of input/output ports (PA0, ..., PA7),
- waiting for a receipt acknowledgement signal from the second microprocessor before starting the transmission of a new plurality of datum bits,
and in that the second microprocessor (B) is configured for:
- waiting for a transmission start signal from the first microprocessor (A),
- receiving a plurality of datum bits via the plurality of input/output ports (PB0, ..., PB7),
- transmitting a receipt acknowledgement signal via the further conductor (CTRL).
